# EUROPEAN PATENT SPECIFICATION

(11) **EP 4 485 892 B1**
(45) Date of publication and mention of the grant of the patent: **14.10.2026**
(21) Application number: 23773853.9
(22) Date of filing: 21.03.2023
(51) Int. Cl.: H04L 45/74, H04L 45/00, H04L 45/28, H04L 45/50, H04L 69/06, H04L 69/22, H04L 69/40

(54) **MESSAGE ENCAPSULATION METHOD AND APPARATUS, MESSAGE TRANSMISSION METHOD AND APPARATUS, AND NETWORK NODE AND STORAGE MEDIUM**
NACHRICHTENVERKAPSELUNGSVERFAHREN UND -VORRICHTUNG, NACHRICHTENÜBERTRAGUNGSVERFAHREN UND -VORRICHTUNG SOWIE NETZWERKKNOTEN UND SPEICHERMEDIUM
PROCÉDÉ ET APPAREIL D'ENCAPSULATION DE MESSAGE, PROCÉDÉ ET APPAREIL DE TRANSMISSION DE MESSAGE, ET NOEUD DE RÉSEAU ET SUPPORT DE STOCKAGE

(30) Priority: 24.03.2022 CN 202210302639
(43) Date of publication of application: 01.01.2025
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: JIANG, Wenying, Beijing 100032 (CN); CHENG, Weiqiang, Beijing 100032 (CN); LIU, Yisong, Beijing 100032 (CN)
(74) Representative: J A Kemp LLP
(86) International application number: PCT/CN2023/082771
(87) International publication number: WO 2023/179606

(56) References cited:
- WO-A1-2021/169258
- WO-A1-2022/222884
- CN-A- 111 682 996
- CN-A- 112 787 923
- CN-A- 114 124 781
- US-A1- 2015 109 902
- US-A1- 2020 162 375
- HU HUAWEI H CHEN FUTUREWEI H CHEN CHINA TELECOM P WU HUAWEI M TOY VERIZON C CAO T HE CHINA UNICOM L LIU FUJITSU X LIU VOLTA NETWOR: "SRv6 Path Egress Protection; draft-hu-rtgwg-srv6-egress-protection-07.txt", no. 7, 22 February 2020 (2020-02-22), pages 1 - 15, XP015137862, Retrieved from the Internet <URL:https://tools.ietf.org/html/draft-hu-rtgwg-srv6-egress-protection-07> [retrieved on 20200222]

## Description

### CROSS-REFERENCE TO RELATED APPLICATIONS

The present application claims the priority of Chinese Patent Application No. 202210302639.X filed in China on March 24, 2022.

### TECHNICAL FIELD

The present disclosure relates to the technical field of networks, and in particular, to a message encapsulation method, message transmission method, message encapsulation apparatus, message transmission apparatus, a first node, a second node, and a storage medium.

### BACKGROUND

The segment routing IPv6 (SRv6) policy based on the Internet Protocol version 6 (IPv6) is a source routing technology. When the SRv6 policy technology is used to provide a high-quality connection service for a user, a multi-homed connection service of dual provider edge (PE) devices or multiple PE devices is generally provided, and active/standby protection, that is, mirror protection, is formed between the PE devices. In the related art, mirror protection of an egress node or a tail node of SRv6 is implemented by extending a control plane protocol, and it is difficult to upgrade and modify existing network devices and implementation costs are high.

Document WO 2021/169258 A1 provides a message forwarding method, routing information publishing method, apparatus and system. Provided in the present application are multiple pieces of positioning information (locators) the prefixes of which are different lengths; a locator having a low network segment prefix is used as a locator that positions to all devices in an anycast group; multiple locators having a high network segment prefix are used as locators that position to each corresponding device in the anycast group; and the multiple locators having the high network segment prefix are located within a network segment range of the locator having the low network segment prefix. When a device in the anycast group is faulty, for a message the destination address of which is the faulty device, a locator having a low network segment prefix will be matched when the destination address of the message is used to query local routing information, thereby forwarding the message to another device in the anycast group.

Document US 2015/109902 A1 provides a method comprising: selecting, by an ingress provider edge router, one of first or second provider edge routers as a primary router for reaching a destination via a core network, and selecting the other of the first or second provider edge routers as a backup router for reaching the destination via the core network; and inserting, into an IPv6 data packet destined for the destination, a primary label assigned by the primary router and a repair label assigned by backup router, and an IPv6 extension header specifying first and second segment identifiers associated with the respective first and second provider edge routers and a protected flag that enables fast rerouting of the IPv6 data packet to the backup router if the primary router is unavailable.

Document WO 2022/222884 A1 provides a failure sensing method, apparatus and system for a forwarding path. In the solution provided by the present application, a first network device can carry, in a sent service message, a first identifier used for determining a first forwarding path; and after detecting a failure of the first forwarding path, a second network device can feed back a failure notification message carrying the first identifier to the first network device. Therefore, even if an end-to-end detection algorithm is not deployed in the first network device, the failure of the first forwarding path can also be determined on the basis of the first identifier in the failure notification message.

### SUMMARY

The invention is set out in the appended set of claims.

### BRIEF DESCRIPTION OF THE DRAWINGS

FIG. 1 is a schematic structural diagram of an extended flag bit of an SRv6 message according to an embodiment of the present disclosure;
FIG. 2 is a schematic flowchart of a message encapsulation method according to an embodiment of the present disclosure;
FIG. 3 is a schematic structural diagram of a first TLV according to an embodiment of the present disclosure;
FIG. 4 is a schematic flowchart of a message transmission method according to an embodiment of the present disclosure;
FIG. 5 is a schematic diagram of a network architecture according to an application embodiment of the present disclosure;
FIG. 6 is a schematic diagram of message forwarding according to an application embodiment of the present disclosure;
FIG. 7 is a schematic structural diagram of a message encapsulation apparatus according to an embodiment of the present disclosure;
FIG. 8 is a schematic structural diagram of a message transmission apparatus according to an embodiment of the present disclosure;
FIG. 9 is a schematic structural diagram of a first node according to an embodiment of the present disclosure; and
FIG. 10 is a schematic structural diagram of a second node according to an embodiment of the present disclosure.

### DETAILED DESCRIPTION

The SRv6 policy is a source routing technology. In the technology, an SRv6 extension header, i.e., an SRH, is introduced into an IPv6 message. An ordered segment list (segmentlist) is encapsulated in a head node to form an SRv6 path, for example, Segmentlist <SID1, SID2, ..., SIDn >, to guide forwarding of an SRv6 message in a network along the specified path from SID1 to SIDn. The SRv6 path may be arranged by using a node SID (an SID of the END type) or a neighbor SID (an SID of the END.X type). When each hop in the SRv6 path uses the neighbor SID, the SRv6 path is a strict path, that is, each hop is specified. When some SIDs in the SRv6 path are node SIDs, the SRv6 path is a loose path, so that there may be different reachable links between two nodes.

When the SRv6 policy technology is used to provide a high-quality connection service for a user, a multi-homed connection service of dual PE devices or multiple PE devices is generally provided, and active/standby protection, that is, mirror protection, is formed between the PE devices. In a customer edge (CE) device dual-homing access scenario of a user site, if an egress node or a tail node of the SRv6 is faulty, service message loss occurs. In the related art, mirror protection of an egress node or a tail node of SRv6 is implemented by extending a control plane protocol, and it is difficult to upgrade and modify existing network devices and implementation costs are high.

On that basis, in various embodiments of the present disclosure, a first node serving as an ingress node sets a first bit in a first message, and encapsulates a first SID in a header of the first message. When it is discovered that a second SID is unreachable and the first bit of the first message is a specific value, a second node serving as the penultimate hop node changes a destination address of the first message to the first SID, wherein the second SID is an SID allocated by a second egress node to a user, the first SID is an SID allocated by a first egress node to the user, and the first bit is a reserved bit in the first message. In the above implementation, a reserved bit in an SRv6 message is used as a flag bit. The flag bit is set, and a first SID is encapsulated in a header, so that when an egress node (a second egress node) of the SRv6 is faulty, a backup SID (the first SID) allocated by a protection node for the egress node to a user can be obtained from the SRv6 message. A destination address of the SRv6 message is changed to the backup SID, and traffic is forwarded to the protection node (a first egress node) corresponding to the egress node, so that protection of the egress node of the SRv6 is implemented in the data plane, and path switching protection of a fault of the egress node of the SRv6 can be quickly completed in a multi-homing access scenario.

The present disclosure will be described in further detail below with reference to the accompanying drawings and embodiments.

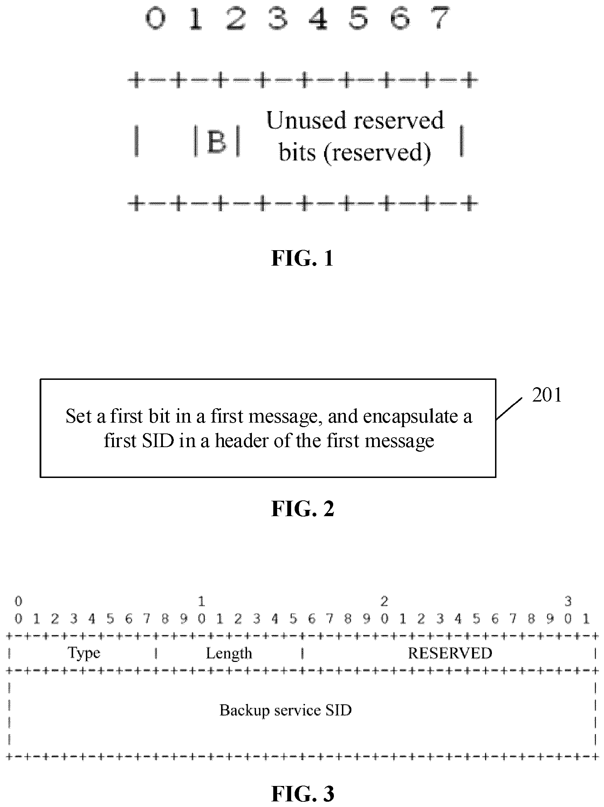

First, the reserved bit of the SRv6 message in the embodiments of the present disclosure will be described. Here, the reserved bit of the SRv6 message is extended. In practical applications, the reserved bit is located in a header of the SRv6 message, and is a reserved bit in an SRH. FIG. 1 shows an exemplary structural diagram of an extended flag (Flag) field. According to the claimed invention, one bit is occupied in the Flag field of the SRH to indicate whether protection switching processing of an egress node needs to be performed when a subsequent node is unreachable. Specifically:

B: a reserved bit in the Flag field. If the bit is set, that is, the bit is set to 1, it is indicated that protection switching processing of the egress node needs to be performed when a subsequent node is unreachable, and a backup SID is carried in the SRv6 message. Here, the backup SID represents an SID allocated by the protection node for the egress node to the user. In addition, in practical applications, the bit "B" may be any bit in the Flag field.

Reserved: an unused reserved bit. During transmission of the SRv6 message, the unused reserved bit must be 0, and when receiving the SRv6 message, a receiver ignores the unused reserved bit.

On the basis of the structure of the flag bit extended for the SRv6 message, the embodiments of the present disclosure provide a message encapsulation method, applied to a first node, the first node being an ingress node. Here, the ingress node may be translated as "ingress", and may also be referred to as a head node, a source node, or the like, and in practical applications, the ingress node describes an ingress of a path or a tunnel. As shown in FIG. 2, and according to the claimed invention, the method includes:
Step 201: setting a first bit in a first message, and encapsulating a first SID in a header of the first message.

The first bit is a reserved bit in the first message. The first SID is an SID allocated by a first egress node to a user.

Here, the first message may be understood as an SRv6 message, and the first bit may be located in the header of the first message, for example, may be understood as the bit "B" in FIG. 1. A first node receives a message sent by a CE device, and sets the first bit when encapsulating an outer IPv6 header of the SRv6. Meanwhile, the first node encapsulates the first SID in the header of the SRv6 message. Here, the SID may be a service SID, and specifically may be a VPN SID. The setting the first bit means that the first bit is set to a specified value. In practical applications, the header in which the first bit is located may be the same as or different from the header in which the first SID is encapsulated.

Here, an egress node may also be referred to as a tail node or a sink node, and in practical applications, the egress node describes an egress of a path or a tunnel.

In an embodiment, before the step of setting a first bit in a first message, and encapsulating a first SID in a header of the first message, the method further includes:
determining that a second SID is configured with a backup first SID, wherein
the second SID is an SID allocated by a second egress node to the user.

The second SID being configured with the backup first SID may also be understood as the second SID being configured with a protected first SID. In practical applications, the first SID may be referred to as a backup SID, and the second SID may be referred to as a primary SID. Here, the second egress node may be understood as a primary egress node or a currently active egress node of a path or a tunnel. The function of the first egress node is to perform protection when the second egress node is faulty. The first egress node may also be referred to as a backup node (backup egress) or a protection node for the second egress node.

That is, upon receiving the message sent by the CE device, the first node first performs a configuration query locally according to the primary SID of the CE user, and the first node encapsulates the outer IPv6 header of the SRv6 only if the primary SID is configured with the corresponding backup SID.

In an embodiment, before the step of setting a first bit in a first message, and encapsulating a first SID in a header of the first message, the method further includes:
determining that a third SID is an SID of a PSP type, wherein
the third SID is a penultimate hop SID in a segment list of an SRH.

Here, in practical applications, according to the existing standard of SRv6, the penultimate hop SID in the segment list of the SRH represents the penultimate hop SID of an SRv6 path or tunnel, but when other extension is subsequently performed on the segment list, the position of the third SID in the segment list of the SRH may change, but the third SID still represents the penultimate hop SID of an SRv6 path or tunnel.

According to the claimed invention, the first SID is encapsulated in an n-th position of a segment list of an SRH of the first message, and the n-th position represents the last position of the segment list or a stack bottom position of the SRH.

According to the claimed invention, the method further includes:
setting the value of an SL field in the SRH to n-1.

Here, the SL field is understood as a segment offset (segments left), and is also referred to as an SL pointer. In practical applications, the first SID is encapsulated in the last position (i.e., the n-th position of the SL) of the segment list of the SRH, and when encapsulation of the outer IPv6 message of the SRv6 is performed on the message, the value of the SL field in the SRH further needs to be set to n-1. Thus, normally, the SL pointer does not point to the first SID, but points to the SID in the (n-1)-th position.

In an embodiment, the first SID is encapsulated in a first TLV of the SRH of the first message.

The first TLV includes at least one of the following:
a type field, used to describe a type of the first TLV;
a length field, used to describe the length of the first SID; and
a data field, used to carry the first SID.

Here, a TLV may be newly defined in the SRH, and the first SID may be carried in the data field of the TLV. The TLV is Type Length Value, and may represent type and length values.

FIG. 3 shows a structural diagram of a first TLV newly defined according to an embodiment of the present disclosure.

The field value of the type field is assigned by the Internet Assigned Numbers Authority (IANA). For example, the field value may be 10.

The length field is used to describe the length of the first SID. For example, the field value of the length field indicates that the length of the first SID is 18 bytes. It should be noted that the length described by the field value of the length field does not include the length of the type field and the length of the length field itself in the first TLV. The first TLV further includes a reserved field (RESERVED) and a backup service SID field (Backup Service SID, which may occupy 128 bits). Backup Service SID

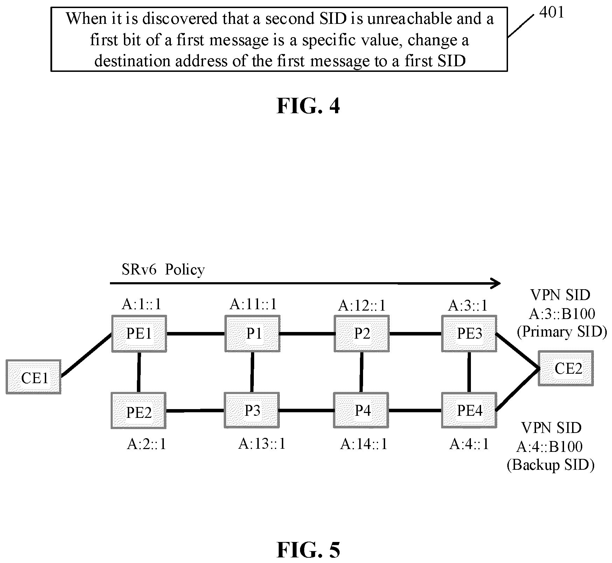

Correspondingly, the embodiments of the present disclosure further provide a message transmission method, applied to a second node, the second node being a penultimate hop node. In practical applications, the penultimate hop node is a node corresponding to a penultimate hop SID in a segment list of an SRv6 path or tunnel. The penultimate hop SID may be an END type or an END.X type. As shown in FIG. 4, the method includes:
Step 401: when it is discovered that a second SID is unreachable and a first bit of a first message is a specific value, changing a destination address of the first message to a first SID.

The first SID is carried in a header of the first message. The second SID is an SID allocated by a second egress node to a user. The first SID is an SID allocated by a first egress node to the user. The first bit is a reserved bit in the first message.

The function of the first egress node is to perform protection when the second egress node is faulty. The first egress node may also be referred to as a backup node or a protection node for the second egress node.

Here, the first message may be understood as an SRv6 message. A first node sets the first bit in the first message, and the first SID is encapsulated in the header of the first message. When the SRv6 message is forwarded to a second node, the second node discovers that the next SID in the segment list in the SRH of the SRv6 message is unreachable, that is, the second egress node or the second tail node is unreachable, and then the second node reads the first SID from the corresponding position in the header of the SRv6 message according to an indication of the first bit, and changes the destination address of the SRv6 message to the first SID. In this way, the SRv6 message having the changed destination address will be sent to the first egress node.

As described above, the first node may encapsulate the first SID in the n-th position of the segment list of the SRH of the first message, or may encapsulate the first SID in the first TLV of the SRH of the first message. Therefore, on the basis of different encapsulation positions of the first SID, the second node correspondingly decapsulates the first SID by using different methods.

In an embodiment, the first SID being carried in a header of the first message includes:
the first SID being carried in an n-th position of a segment list of an SRH of the first message, and the n-th position being the last position of the segment list or a stack bottom position of the SRH.

In practical applications, the first node encapsulates the first SID in the last position of the segment list of the SRH, and when encapsulation of the outer IPv6 header of the SRv6 tunnel is performed on the message, the value of the SL field in the SRH further needs to be set to n-1. Thus, normally, the SL pointer does not point to the first SID, but points to the SID in the (n-1)-th position.

In an embodiment, the first SID being carried in a header of the first message includes:
the first SID being carried in a TLV of an SRH of the first message.

The first TLV includes at least one of the following:
a type field, used to describe a type of the first TLV;
a length field, used to describe the length of the first SID; and
a data field, used to carry the first SID.

Here, when the second node discovers that the next SID in the segment list in the SRH of the SRv6 message is unreachable, that is, the second egress node is unreachable, the second node reads the first SID from the data field of the first TLV in the SRH of the SRv6 message according to an indication of the first bit.

Here, the penultimate hop SID of the SRv6 must be an SID of the PSP type to support popping of the SRH.

In the embodiments of the present disclosure, a reserved bit in an SRv6 message is used as a flag bit. The flag bit is set, and a first SID is encapsulated in a header, so that when an egress node of the SRv6 is faulty, a backup SID allocated by a protection node for the egress node to a user can be obtained from the SRv6 message. A destination address of the SRv6 message is changed to the backup SID, and traffic is forwarded to the protection node for the egress node, so that control plane protocol extension does not need to be performed, and protection of the egress node of the SRv6 is directly implemented in the data plane. In a multi-homing access scenario, the solution is easy to deploy, and path switching protection of a fault of a tail node of the SRv6 can be quickly completed.

The present disclosure will be described in further detail below with reference to application embodiments.

In the present application embodiment, a network includes routing devices such as PE1, PE2, PE3, PE4, P1, P2, P3, and P4. CE1 and CE2 are user-side devices, and a corresponding networking structure and SID allocation are shown in FIG. 5. PE1 is a head node (i.e., a first node) of an SRv6 path/tunnel, and may receive, via a control protocol, a primary VPN SID (i.e., a second SID) allocated to a user by a primary egress node (i.e., a second egress node) and a backup VPN SID (i.e., a first SID) allocated to the user by a backup egress node (i.e., a first egress node), or receive a VPN SID issued by a controller, or acquire the VPN SID by means of static configuration. A virtual private network (VPN) 1 user includes two sites CE1 and CE2, and PE3 and PE4 are dual-homing access devices of the site CE2. PE3 is a primary access device, and PE4 is a backup access device, so that a VPN SID allocated by PE3 to the VPN1 user is a primary SID, and a VPN SID allocated by PE4 to the VPN1 user is a backup SID. With reference to FIG. 5, the VPN SID "A:4::B100" is a backup SID of the VPN SID "A:3::B100", and a correspondence between "A:4::B100" and "A:3::B100" is present on PE1. Traffic from CE1 to CE2 is borne by an SRv6 policy path/tunnel, and corresponding path information is as follows:
segment list (segmentlist): <A:1::1, A:11::1, A:12::1, A:3::B100>

The penultimate hop SID (i.e., a third SID) "A:12::1" in the segment list is an SID of a penultimate segment popping (PSP) Flavor type.

In practical applications, PE1 receives a message sent by CE1, learns, according to the local correspondence between "A:4::B100" and "A:3::B100" when encapsulating an outer IPv6 header of the SRv6 tunnel, that the VPN1 user has a dual-homing protected egress node, meanwhile performs checking to determine that the penultimate hop SID "A:12::1" of segmentlist of the SRv6 is an SID of the PSP Flavor type, therefore sets SRH.B-Flag=1, and meanwhile encapsulates the backup SID "A:4::B100" in a corresponding position in the SRv6 message. The following encapsulation positions may be selected:
encapsulation position 1: "A:4::B100" is carried in the last position of segmentlist; and
encapsulation position 2: "A:4::B100" is carried in an SRH TLV.

If the backup SID "A:4::B100" is carried in encapsulation position 1, the value of the current SL is set to the value of Last Entry minus 1, i.e. SL=n-1=3, so that the SL does not point to the backup SID, and only SID List[4] points to "A:4::B100". If "A:4::B100" is carried in encapsulation position 2, no additional processing is required.

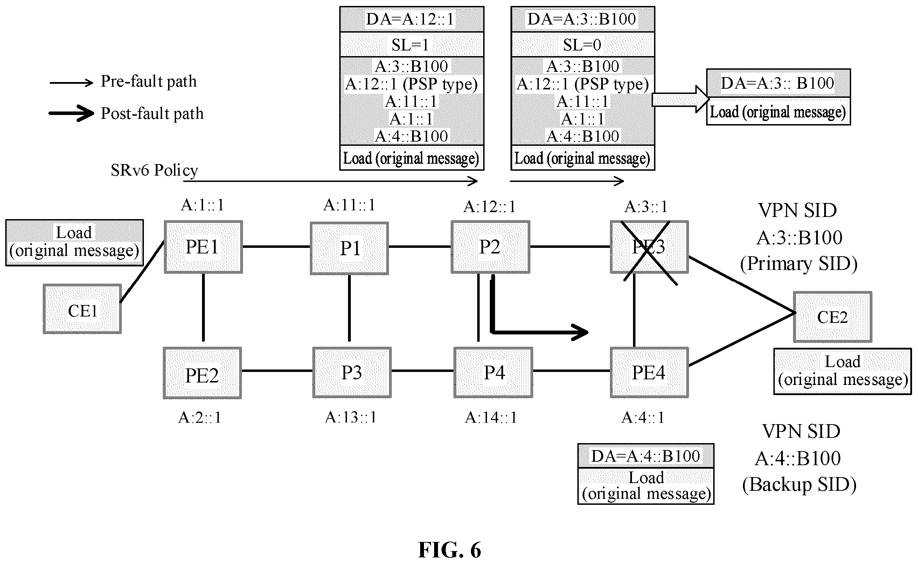

Referring to FIG. 6, when PE3 (a primary egress) is faulty, and when an SRv6 message reaches the penultimate hop node P2 (the second node) along the SRv6 path, P2 discovers that the next SID "A:3::B100" in segmentlist is unreachable, therefore obtains the backup SID "A:4::B100" from a corresponding position in the SRv6 message according to an indication of SRH.B-Flag=1, changes a destination address of the SRv6 message to backup "A:4::B100", and meanwhile pops the SRH according to the current SID being the PSP type Flavor. P2 continues to send the SRv6 message to PE4 (a backup egress) according to the new destination address "A:4::B100". When the SRv6 message reaches PE4, a corresponding action is performed according to the SID type of "A:4::B100". The outer IPv6 header is decapsulated. An inner original message is recovered. The original message is forwarded to CE2, thereby automatically implementing automatic protection switching when PE2 is faulty.

In addition, the method provided in the embodiments of the present invention further includes, as shown in FIG. 6, that after routing convergence is completed, the ingress node PE1 reselects a traffic forwarding path for the VPN1 user, to switch the path from CE1 to CE2 to the egress node PE4.

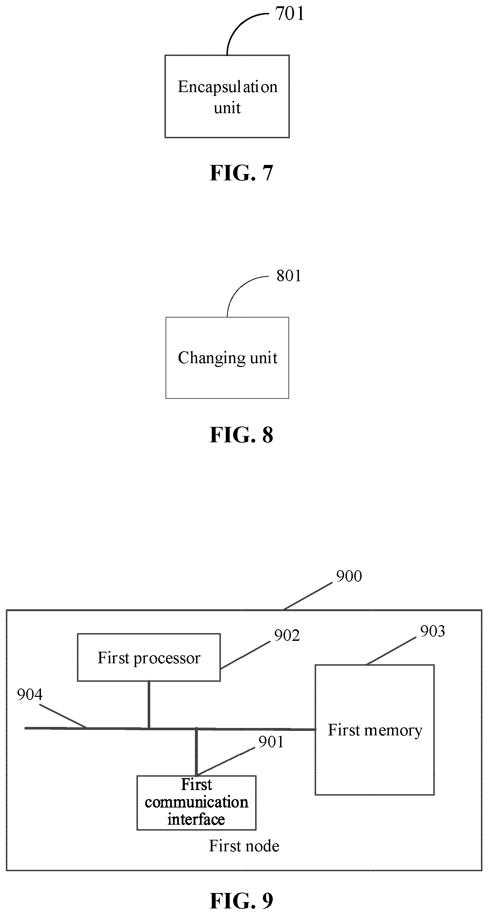

In order to implement the method on the first node side of the embodiments of the present disclosure, the embodiments of the present disclosure further provide a message encapsulation apparatus provided on a first node. The first node is an ingress node. As shown in FIG. 7, the apparatus includes:
an encapsulation unit 701, used to set a first bit in a first message, and encapsulate a first SID in a header of the first message, wherein
the first bit is a reserved bit in the first message, and the first SID is an SID allocated by a first egress node to a user.

In an embodiment, the first SID is encapsulated in an n-th position of a segment list of an SRH of the first message, and the n-th position represents the last position of the segment list or a stack bottom position of the SRH.

In an embodiment, the encapsulation unit 701 is further used to set the value of an SL field in the SRH to n-1.

In an embodiment, the first SID is encapsulated in a first TLV of the SRH of the first message.

In an embodiment, the first egress node is a protection node for a second egress node.

In an embodiment, the encapsulation unit 701 is further used to:
before setting the first bit in the first message, and encapsulating the first SID in the header of the first message, determine that a second SID is configured with a backup first SID, wherein
the second SID is an SID allocated by the second egress node to the user.

In an embodiment, the encapsulation unit 701 is further used to:
before setting the first bit in the first message, and encapsulating the first SID in the header of the first message, determine that a third SID is an SID of a penultimate segment popping (PSP) type, wherein
the third SID is a penultimate hop SID in the segment list of the SRH.

In practical applications, the encapsulation unit 701 may be implemented by a processor in the message encapsulation apparatus.

It should be noted that: for the message encapsulation apparatus provided in the above embodiments, when message encapsulation is performed, the division of the above program modules is merely used as an example for description. In practical applications, the above processing can be allocated to different program modules for completion according to needs, that is, the internal structure of the apparatus is divided into different program modules to accomplish all or part of the processing described above. In addition, the message encapsulation apparatus and message encapsulation method embodiments provided in the above embodiments belong to the same concept. For a specific implementation process of the apparatus, refer to the method embodiments for details, which will not be repeated herein.

In order to implement the method on the second node side of the embodiments of the present disclosure, the embodiments of the present disclosure further provide a message transmission apparatus provided on a second node. The second node is a penultimate hop node. In practical applications, the penultimate hop node is a node corresponding to the penultimate hop SID in the segment list of the SRv6 path or tunnel. The penultimate hop SID may be an END type or an END.X type. As shown in FIG. 8, the apparatus includes:
a changing unit 801, used to, when it is discovered that a second SID is unreachable and a first bit of a first message is a specific value, change a destination address of the first message to the first SID, wherein
the first SID is carried in a header of the first message, the second SID is an SID allocated by a second egress node to a user, the first SID is an SID allocated by a first egress node to the user, and the first bit is a reserved bit in the first message.

In an embodiment, the first egress node is a protection node of the second egress node.

In an embodiment, the first SID being carried in a header of the first message includes:
the first SID being carried in an n-th position of a segment list of an SRH of the first message, and the n-th position being the last position of the segment list or a stack bottom position of the SRH.

In an embodiment, the first SID being carried in a header of the first message includes:
the first SID being carried in a TLV of an SRH of the first message.

In practical applications, the changing unit 801 may be implemented by a communication interface in the message transmission apparatus.

It should be noted that: for the message transmission apparatus provided in the above embodiments, when message transmission is performed, the division of the above program modules is merely used as an example for description. In practical applications, the above processing can be allocated to different program modules for completion according to needs, that is, the internal structure of the apparatus is divided into different program modules to accomplish all or part of the processing described above. In addition, the message transmission apparatus and message transmission method embodiments provided in the above embodiments belong to the same concept. For a specific implementation process of the apparatus, refer to the method embodiments for details, which will not be repeated herein.

On the basis of hardware implementation of the above program modules and in order to implement the method on the first node side of the embodiments of the present disclosure, the embodiments of the present disclosure further provide a first node. The first node represents a head node of the SRv6. As shown in FIG. 9, the first node 900 includes:
a first communication interface 901, capable of exchanging information with other network nodes; and
a first processor 902, connected to the first communication interface 901 to exchange information with the other network nodes, and used to, when running a computer program, perform the method provided in one or more technical solutions on the first node side. The computer program is stored on a first memory 903.

Specifically, the first processor 902 is used to set a first bit in a first message, and encapsulate a first SID in a header of the first message, wherein
the first bit is a reserved bit in the first message, and the first SID is an SID allocated by a first egress node to a user.

In an embodiment, the first SID is encapsulated in an n-th position of a segment list of an SRH of the first message, and the n-th position represents the last position of the segment list or a stack bottom position of the SRH.

In an embodiment, the first processor 902 is further used to set the value of an SL field in the SRH to n-1.

In an embodiment, the first SID is encapsulated in a first TLV of the SRH of the first message.

In an embodiment, the first egress node is a protection node for a second egress node.

In an embodiment, the first processor 902 is further used to:
before setting the first bit in the first message, and encapsulating the first SID in the header of the first message, determine that a second SID is configured with a backup first SID, wherein
the second SID is an SID allocated by the second egress node to the user.

In an embodiment, the first processor 902 is further used to:
before setting the first bit in the first message, and encapsulating the first SID in the header of the first message, determine that a third SID is an SID of a penultimate segment popping (PSP) type, wherein
the third SID is a penultimate hop SID in the segment list of the SRH.

It should be noted that: specific processing processes of the first processor 902 and the first communication interface 901 may be understood with reference to the above method.

Certainly, in practical applications, various assemblies in the first node 900 are coupled together by means of a bus system 904. It can be understood that the bus system 904 is used to implement the connection and communication between these assemblies. The bus system 904 includes, in addition to a data bus, a power supply bus, a control bus, and a status signal bus. However, for the sake of clear illustration, various buses are all designated as the bus system 904 in FIG. 9.

The first memory 903 in the embodiments of the present disclosure is used to store various types of data to support operations of the first node 900. Examples of the data include: any computer program operating on the first node 900.

The method disclosed in the embodiments of the present disclosure described above may be applied to the first processor 902, or implemented by the first processor 902. The first processor 902 may be an integrated circuit chip having a signal processing capability. During implementation, each step in the method described above may be completed by an integrated logic circuit of hardware in the first processor 902 or instructions in the form of software. The first processor 902 described above may be a general-purpose processor, a digital signal processor (DSP), or other programmable logic devices, a discrete gate or transistor logic device, a discrete hardware assembly, or the like. The various methods, steps, and logical block diagrams disclosed in the embodiments of the present disclosure may be implemented or executed by the first processor 902. The general-purpose processor may be a microprocessor, any conventional processor or the like. The steps of the methods disclosed with reference to the embodiments of the present disclosure may be directly embodied as hardware and executed and completed by a decoding processor, or executed and completed by a combination of hardware and software modules in the decoding processor. The software modules may be located in a storage medium. The storage medium is located in the first memory 903, and the first processor 902 reads the information in the first memory 903, and completes the steps of the aforementioned method in combination with its hardware.

In an exemplary embodiment, the first node 900 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic components, and is used to perform the aforementioned method.

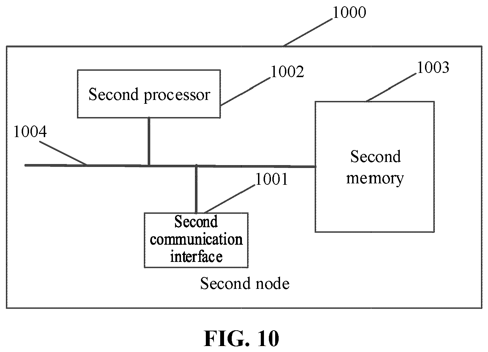

On the basis of hardware implementation of the above program modules and in order to implement the method on the second node side of the embodiments of the present disclosure, the embodiments of the present disclosure further provide a second node. The second node represents the penultimate hop node of the SRv6. In practical applications, the penultimate hop node is a node corresponding to the penultimate hop SID in the segment list of the SRv6 path or tunnel. The penultimate hop SID may be an END type or an END.X type. As shown in FIG. 10, the second node 1000 includes:
a second communication interface 1001, capable of exchanging information with other network nodes; and
a second processor 1002, connected to the second communication interface 1001 to exchange information with the other network nodes, and used to, when running a computer program, perform the method provided in one or more technical solutions on the second node side. The computer program is stored on a second memory 1003.

Specifically, the second processor 1002 is used to, when it is discovered that a second SID is unreachable and a first bit of a first message is a specific value, change a destination address of the first message to a first SID, wherein
the first SID is carried in a header of the first message, the second SID is an SID allocated by a second egress node to a user, the first SID is an SID allocated by a first egress node to the user, and the first bit is a reserved bit in the first message.

In an embodiment, the first egress node is a protection node of the second egress node.

In an embodiment, the first SID being carried in a header of the first message includes:
the first SID being carried in an n-th position of a segment list of an SRH of the first message, and the n-th position being the last position of the segment list or a stack bottom position of the SRH.

In an embodiment, the first SID being carried in a header of the first message includes:
the first SID being carried in a TLV of an SRH of the first message.

It should be noted that: specific processing processes of the second processor 1002 and the second communication interface 1001 may be understood with reference to the above method.

Certainly, in practical applications, various assemblies in the second node 1000 are coupled together by means of a bus system 1004. It can be understood that the bus system 1004 is used to implement the connection and communication between these assemblies. The bus system 1004 includes, in addition to a data bus, a power supply bus, a control bus, and a status signal bus. However, for the sake of clear illustration, various buses are all designated as the bus system 1004 in FIG. 10.

The second memory 1003 in the embodiments of the present disclosure is used to store various types of data to support operations of the second node 1000. Examples of the data include: any computer program operating on the second node 1000.

The method disclosed in the embodiments of the present disclosure described above may be applied to the second processor 1002, or implemented by the second processor 1002. The second processor 1002 may be an integrated circuit chip having a signal processing capability. During implementation, each step in the method described above may be completed by an integrated logic circuit of hardware in the second processor 1002 or instructions in the form of software. The second processor 1002 described above may be a general-purpose processor, a DSP, or other programmable logic devices, a discrete gate or transistor logic device, a discrete hardware assembly, or the like. The various methods, steps, and logical block diagrams disclosed in the embodiments of the present disclosure may be implemented or executed by the second processor 1002. The general-purpose processor may be a microprocessor, any conventional processor or the like. The steps of the methods disclosed with reference to the embodiments of the present disclosure may be directly embodied as hardware and executed and completed by a decoding processor, or executed and completed by a combination of hardware and software modules in the decoding processor. The software modules may be located in a storage medium. The storage medium is located in the second memory 1003, and the second processor 1002 reads the information in the second memory 1003, and completes the steps of the aforementioned methods in combination with its hardware.

In an exemplary embodiment, the second node 1000 may be implemented by one or more ASICs, DSPs, PLDs, CPLDs, FPGAs, general-purpose processors, controllers, MCUs, microprocessors, or other electronic components, and is used to perform the aforementioned method.

It can be understood that the memories (the first memory 903 and the second memory 1003) of the embodiments of the present disclosure may be volatile memories or nonvolatile memories, or may include both volatile and nonvolatile memories. The nonvolatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc, or a compact disc read-only memory (CD-ROM). The magnetic surface memory may be a magnetic disk memory or a magnetic tape memory. The volatile memory may be a random access memory (RAM), which acts as an external cache. By way of example, but not by way of limitation, many forms of RAM may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a SyncLink dynamic random access memory (SLDRAM), and a Direct Rambus random access memory (DRRAM). The memories described in the embodiments of the present disclosure are intended to include, but are not limited to, the aforementioned and any other suitable type of memory.

In an exemplary embodiment, the embodiments of the present disclosure further provide a storage medium, i.e., a computer storage medium, specifically a computer-readable storage medium, for example, including the first memory 903 storing a computer program, wherein the computer program may be executed by the first processor 902 of the first node 900, so as to complete the steps of the method on the first node side. As another example, the storage medium includes the second memory 1003 storing a computer program, wherein the computer program may be executed by the second processor 1002 of the second node 1000, so as to complete the steps of the method on the second node side. The computer-readable storage medium may be a memory such as a FRAM, a ROM, a PROM, an EPROM, an EEPROM, a flash memory, a magnetic surface memory, a compact disc, or a CD-ROM.

It should be noted that: "first," "second," and the like are used for distinguishing between similar objects and not necessarily for describing a particular sequential or chronological order.

In addition, the technical solutions recited in the embodiments of the present disclosure may be arbitrarily combined as long as they do not conflict with each other.

## Claims

1. A message encapsulation method for a first node, the first node being an ingress node, the method comprising:
setting (201) a first bit in a first message to 1 to indicate that protection switching processing of an egress node needs to be performed when a subsequent node is unreachable, and encapsulating a first Segment Identifier, SID, in a header of the first message, wherein
the first bit is a reserved bit in a Flag field of a segment routing header, SRH, of the first message, and the first SID is an SID allocated by a first egress node to a user,
**characterized in that**,
the first SID is encapsulated in an n-th position of a segment list of the SRH of the first message, and the n-th position represents a last position of the segment list or a stack bottom position of the SRH,
wherein the method further comprises:
setting a value of a segments left, SL, field in the SRH to n-1 to point to an SID in an (n-1)-th position.

2. The method of claim 1, wherein the first egress node is a protection node for a second egress node.

3. The method of claim 2, wherein before setting the first bit in the first message, and encapsulating the first SID in the header of the first message, the method further comprises:
determining that a second SID is configured with a backup first SID, wherein
the second SID is an SID allocated by the second egress node to the user.

4. The method of claim 1, wherein before setting the first bit in the first message, and encapsulating the first SID in the header of the first message, the method further comprises:
determining that a third SID is an SID of a Penultimate Segment Popping, PSP, type, wherein
the third SID is a penultimate hop SID in a segment list of a Segment Routing Header, SRH.

5. A message transmission method for a second node, the second node being a penultimate hop node, the method comprising:
when it is discovered that a second Segment Identifier, SID, is unreachable and a first bit of a first message is 1, changing (401) a destination address of the first message to a first SID, wherein the first bit of the first message being 1 indicates that protection switching processing of an egress node needs to be performed when a subsequent node is unreachable, and
the first SID is carried in a header of the first message, the second SID is an SID allocated by a second egress node to a user, the first SID is an SID allocated by a first egress node to the user, and the first bit is a reserved bit in a Flag field of a segment routing header, SRH, of the first message; and
sending the first message to the first egress node according to the first SID,
**characterized in that**,
the first SID being carried in a header of the first message comprises:
the first SID being carried in an n-th position of a segment list of the SRH of the first message, and the n-th position being a last position of the segment list or a stack bottom position of the SRH, wherein a value of a segments left, SL, field in the SRH is n-1 to point to an SID in an (n-1)-th position.

6. A first node, comprising: a first processor and a first memory for storing a computer program executable by the processor,
wherein the first processor is configured to: when running the computer program, perform the steps of the method any one of claims 1 to 4.

7. A second node, comprising: a second processor and a second memory for storing a computer program executable by the processor,
wherein the second processor is configured to: when running the computer program, perform the steps of the method of claim 5.

8. A storage medium having stored thereon a computer program that when executed by a processor, causes a first node to implement the steps of the method of any one of claims 1 to 4.

9. A storage medium having stored thereon a computer program that when executed by a processor, causes a second node to implement the steps of the method of claim 5.

## Patentansprüche

1. Nachrichtenverkapselungsverfahren, das auf einen ersten Knoten angewendet wird, wobei der erste Knoten ein Eingangsknoten ist, das Verfahren umfassend:
Setzen (201) eines ersten Bits in einer ersten Nachricht auf 1, um anzugeben, dass eine Schutzumschaltungsverarbeitung eines Ausgangsknotens durchgeführt werden muss, wenn ein nachfolgender Knoten unerreichbar ist, und Verkapseln einer ersten Segmentkennzeichnung, SID, in einem Header der ersten Nachricht, wobei
das erste Bit ein reserviertes Bit in einem Flag-Feld eines Segment-Routing-Headers, SRH, der ersten Nachricht ist, und die erste SID eine durch einen ersten Ausgangsknoten einem Benutzer zugewiesene SID ist,
wobei die erste SID in einer n-ten Position einer Segmentliste des SRH der ersten Nachricht verkapselt ist, und die n-te Position eine letzte Position der Segmentliste oder eine Stack-Bottom-Position des SRH darstellt,
wobei das Verfahren ferner umfasst:
Setzen eines Werts eines Verbleibende-Segmente-Feldes, SL-Feldes, in dem SRH auf n-1, um auf eine SID an einer (n-1)-ten Position zu zeigen.

2. Verfahren nach Anspruch 1, wobei der erste Ausgangsknoten ein Schutzknoten für einen zweiten Ausgangsknoten ist.

3. Verfahren nach Anspruch 2, wobei vor dem Setzen des ersten Bits in der ersten Nachricht und dem Verkapseln der ersten SID in dem Header der ersten Nachricht das Verfahren ferner umfasst:
Bestimmen, dass eine zweite SID mit einer ersten Backup-SID konfiguriert ist, wobei
die zweite SID eine durch den zweiten Ausgangsknoten dem Benutzer zugewiesene SID ist.

4. Verfahren nach Anspruch 1, wobei vor dem Setzen des ersten Bits in der ersten Nachricht und dem Verkapseln der ersten SID in dem Header der ersten Nachricht das Verfahren ferner umfasst:
Bestimmen, dass eine dritte SID eine SID eines Vorletztes-Segment-Popping-Typs, PSP-Typs, ist, wobei
die dritte SID eine vorletzte Hop-SID in einer Segmentliste eines Segment-Routing-Headers, SRH ist.

5. Nachrichtenübertragungsverfahren, das auf einen zweiten Knoten angewendet wird, wobei der zweite Knoten ein vorletzter Hop-Knoten ist, das Verfahren umfassend:
wenn festgestellt wird, dass eine zweite Segmentkennzeichnung, SID, unerreichbar ist und ein erstes Bit einer ersten Nachricht 1 ist, Ändern (401) einer Zieladresse der ersten Nachricht in eine erste SID, wobei das erste Bit der ersten Nachricht, das 1 ist, angibt, dass die Schutzumschaltungsverarbeitung eines Ausgangsknotens durchgeführt werden muss, wenn ein nachfolgender Knoten unerreichbar ist, und
die erste SID in einem Header der ersten Nachricht mitgeführt wird, die zweite SID eine einem Benutzer durch einen zweiten Ausgangsknoten zugewiesene SID ist, die erste SID eine dem Benutzer durch einen ersten Ausgangsknoten zugewiesene SID ist, und das erste Bit ein reserviertes Bit in einem Flag-Feld eines Segment-Routing-Headers, SRH, der ersten Nachricht ist; und
Senden der ersten Nachricht an den ersten Ausgangsknoten gemäß der ersten SID,
wobei die erste SID, die in einem Header der ersten Nachricht mitgeführt wird, umfasst:
die erste SID wird an einer n-ten Position einer Segmentliste des SRH der ersten Nachricht mitgeführt und die n-te Position ist eine letzte Position der Segmentliste oder eine Stack-Bottom-Position des SRH, wobei ein Wert eines Verbleibende-Segmente-Feldes, SL-Feldes, in dem SRH n-1 ist, um auf eine SID in einer (n-1)-ten Position zu zeigen.

6. Erster Knoten, umfassend: einen ersten Prozessor und einen ersten Speicher zum Speichern eines Computerprogramms, das durch den Prozessor ausführbar ist,
wobei der erste Prozessor konfiguriert ist zum: wenn das Computerprogramm abläuft, Durchführen der Schritte des Verfahrens eines der Ansprüche 1 bis 4.

7. Zweiter Knoten, umfassend einen zweiten Prozessor und einen zweiten Speicher zum Speichern eines Computerprogramms, das durch den Prozessor ausführbar ist,
wobei der zweite Prozessor konfiguriert ist zum: wenn das Computerprogramm abläuft, Durchführen der Schritte des Verfahrens nach Anspruch 5.

8. Speicherungsmedium, das ein Computerprogramm darauf gespeichert aufweist, das, wenn es durch einen Prozessor ausgeführt wird, die Schritte des Verfahrens nach einem der Ansprüche 1 bis 4 implementiert.

9. Speicherungsmedium, das ein Computerprogramm darauf gespeichert aufweist, das, wenn es durch einen Prozessor ausgeführt wird, die Schritte des Verfahrens nach Anspruch 5 implementiert.

## Revendications

1. Procédé d'encapsulation de message, appliqué à un premier nœud, le premier nœud étant un nœud d'entrée, le procédé comprenant :
la définition (201) d'un premier bit dans un premier message sur 1 pour indiquer qu'un traitement de commutation de protection d'un nœud de sortie doit être effectué lorsqu'un nœud suivant est inaccessible, et l'encapsulation d'un premier identificateur de segment, SID, dans un en-tête du premier message, dans lequel
le premier bit est un bit réservé dans un champ indicateur d'un en-tête de routage de segment, SRH, du premier message, et le premier SID est un SID alloué par un premier nœud de sortie à un utilisateur,
dans lequel le premier SID est encapsulé à une n-ième position d'une liste de segments du SRH du premier message, et la n-ième position représente une dernière position de la liste de segments ou une position de fond de pile du SRH,
dans lequel le procédé comprend en outre :
la définition d'une valeur d'un champ de segments restants, SL, dans le SRH sur n-1 pour pointer vers un SID dans une (n-1)-ième position.

2. Procédé selon la revendication 1, dans lequel le premier nœud de sortie est un nœud de protection pour un second nœud de sortie.

3. Procédé selon la revendication 2, dans lequel avant la définition du premier bit dans le premier message, et l'encapsulation du premier SID dans l'en-tête du premier message, le procédé comprend en outre :
la détermination qu'un second SID est configuré avec un premier SID de secours, dans lequel
le second SID est un SID alloué par le second nœud de sortie à l'utilisateur.

4. Procédé selon la revendication 1, dans lequel avant la définition du premier bit dans le premier message, et l'encapsulation du premier SID dans l'en-tête du premier message, le procédé comprend en outre :
la détermination qu'un troisième SID est un SID d'un type suppression de l'avant-dernier segment, PSP, dans lequel
le troisième SID est un SID de l'avant-dernier saut dans une liste de segments d'un en-tête de routage de segment, SRH.

5. Procédé de transmission de message, appliqué à un second nœud, le second nœud étant un nœud de l'avant-dernier saut, le procédé comprenant :
lorsqu'il est détecté qu'un second identificateur de segment, SID, est inaccessible et qu'un premier bit d'un premier message est 1, le changement (401) d'une adresse de destination du premier message en un premier SID, dans lequel le premier bit du premier message étant 1 indique qu'un traitement de commutation de protection d'un nœud de sortie doit être effectué lorsqu'un nœud suivant est inaccessible, et
le premier SID est transféré dans un en-tête du premier message, le second SID est un SID alloué par un second nœud de sortie à un utilisateur, le premier SID est un SID alloué par un premier nœud de sortie à l'utilisateur, et le premier bit est un bit réservé dans un champ indicateur d'un en-tête de routage de segment, SRH, du premier message ; et
l'envoi du premier message au premier nœud de sortie selon le premier SID,
dans lequel le premier SID étant transféré dans un en-tête du premier message comprend :
le premier SID étant transféré dans une n-ième position d'une liste de segments du SRH du premier message, et la n-ième position étant une dernière position de la liste de segments ou une position de fond de pile du SRH, dans lequel une valeur d'un champ de segments restants, SL, dans le SRH est n-1 pour pointer vers un SID dans une (n-1)-ième position.

6. Premier nœud, comprenant : un premier processeur et une première mémoire permettant de stocker un programme informatique exécutable par le processeur,
dans lequel le premier processeur est configuré pour : lors de l'exécution du programme informatique, effectuer les étapes du procédé selon l'une quelconque des revendications 1 à 4.

7. Second nœud, comprenant : un second processeur et une seconde mémoire permettant de stocker un programme informatique exécutable par le processeur,
dans lequel le second processeur est configuré pour : lors de l'exécution du programme informatique, effectuer les étapes du procédé selon la revendication 5.

8. Support de stockage ayant stocké sur celui-ci un programme informatique qui lorsqu'il est exécuté par un processeur, implémente les étapes du procédé selon l'une quelconque des revendications 1 à 4.

9. Support de stockage ayant stocké sur celui-ci un programme informatique qui lorsqu'il est exécuté par un processeur, implémente les étapes du procédé selon la revendication 5.
